Europäisches Patentamt

European Patent Office

Office européen des brevets

(11) Veröffentlichungsnummer: **0 186 130 B1**

## EUROPÄISCHE PATENTSCHRIFT

(45) Veröffentlichungstag der Patentschrift: **02.05.91**

(51) Int. Cl.⁵: **B21D 53/08**, B23P 15/26

(21) Anmeldenummer: **85116190.1**

(22) Anmeldetag: **18.12.85**

(54) **Verfahren zur Herstellung zylindrische Wärmetauschersammelrohrstrukturen bildender ringscheibenartiger Bauteile.**

(30) Priorität: **22.12.84 DE 3447145**

(43) Veröffentlichungstag der Anmeldung:
**02.07.86 Patentblatt 86/27**

(45) Bekanntmachung des Hinweises auf die
Patenterteilung:
**02.05.91 Patentblatt 91/18**

(84) Benannte Vertragsstaaten:
**DE FR GB IT NL SE**

(56) Entgegenhaltungen:
**DE-A- 2 450 739      DE-A- 3 310 061
US-A- 3 561 524      US-A- 3 627 039
US-A- 3 686 917      US-A- 4 036 293**

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Hagemeister, Klaus, Dipl.-Ing.
Manzostrasse 28 b
W-8000 München 50(DE)**

## Beschreibung

Die Erfindung bezieht sich auf ein Verfahren nach dem Oberbegriff des Patentanspruchs 1.

Aus den Patentschriften US-A-3746083 oder US-A-4,036,293 sind Wärmetauscher bekannt, die im wesentlichen aus einem zentralen Sammelrohr bestehen, innerhalb desselben zwei voneinander getrennte Luftführungen ausgebildet sind. Die Matrix eines derartigen Wärmetauschers besteht aus Rohrbündeln, die im wesentlichen seitlich sowie U-förmig von diesem betreffenden Sammelrohr auskragen. Für den Betrieb dieses Warmetauschers ist vorausgesetzt, daß die genannte Matrix stets von Heißgas umströmt ist. Dabei wird verhältnismäßig kühle Druckluft zunächst in die obere oder eine Rohrführung innerhalb des Sammelrohrs eingeführt, strömt dann in die seitlich angeordneten Matrixrohre, über welche sie aufgeheizt wird, wobei dann die aufgeheizte Druckluft nach erfolgter Umlenkung über die betreffende Matrix in die untere bzw. andere Rohrführung des Sammelrohrs abströmt, aus welchem sie dann einem Verbraucher zuführbar ist.

Bei weiterentwickelten Wärmetauscherkonzeptionen der genannten Art sind anstelle eines gemeinsamen Sammelrohrs für die beiden voneinander getrennten Druckluftführungen Einzelsammelrohre im wesentlichen parallel neben- oder übereinander angeordnet, wobei dann das eine Sammelrohr ausschließlich für die Zuführung der kalten Druckluft in die Matrix, das andere Sammelrohr ausschließlich für die Abführung der aufgeheizten Druckluft zum entsprechenden Verbraucher vorgesehen sein soll.

Bei den zuvor erwähnten bekannten bzw. untersuchten Wärmetauscher-Konzeptionen wird in der Regel davon ausgegangen, die betreffenden Sammelrohre entsprechend zu perforieren oder mit einer Belochung zu versehen, um im Rahmen dieser Belochung die anschlußseitigen Enden der Matrixprofilrohre einzuschieben und dann mit dem Sammelrohr zu verlöten oder zu verschweißen.

Aus der DE-A-33 10 061 ist es ferner bekannt, die betreffende Bodenstruktur eines derartigen Wärmetauschers der vorstehend genannten Art schichtbauweise aus einzelnen aneinander zu fügenden Ringelementen zusammenzusetzen. Dabei können die ringförmigen Elemente entsprechend derart vorprofiliert sein, daß mit Hilfe von immer jeweils zwei an- oder aufeinander anzuordnenden ringförmigen Elementen Durchgangsöffnungen zum Einsetzen oder zum Anschluß für die einzelnen Rohre der Matrix entstehen. Jede derartige Vorprofilierung stellt also eine entsprechende Ausnehmung oder Einbuchtung bereit, die der Matrixrohrendaußenkonfiguration entsprechen soll. Die zuvor genannte bekannte Lösung befaßt sich nicht mit einer geeigneten massenproduktionsweisen Herstellbarkeit derartiger Elemente. Außerdem ergeben sich aus dem zuvor genannten bekannten Fall nur allgemeine Anweisungen bezüglich entsprechender,die Matrixprofil-Materialausformungen bereitstellender Umformverfahren, die z.B. durch Prägen, schlagen oder Walzen erzielbar wären.

Neben der zu dieser bekannten Lösung schon erwähnten Ausformungsbereitstellung zum Einfügen der Matrixrohre beim Wärmetauscher kommt es ferner darauf an, eine vergleichsweise hohe Sorgfalt in Bezug auf das spätere Einlöten der Matrixprofilrohrenden walten zu lassen, wobei also möglichst enge Toleranzen zu berücksichtigen wären, also z.B. ungleichförmige Verlötungsstrukturen im Interesse hoher Betriebssicherheit auf jeden Fall vermieden werden sollten. Es kommt hierbei ferner darauf an, die betreffenden ring-scheibenförmigen Bauteile zur Erstellung des Wärmetauschers entsprechend vorbereiten zu müssen (Zentrierungen und gegenseitige Paßflächen); darüber hinaus wären unterschiedlich hohe Temperaturgradienten, insbesondere im Bereich der Rohrbodenstruktur des Wärmetauschers, zu berücksichtigen sowie geeignete Kompensationsmittel hierzu, die sich durch unterschiedliche Materialkonturierungen oder Ausnehmungen in die Wege leiten lassen sollen, wobei dann auch allgemein bei derartigen Wärmetauschern örtlich anzupassende Steifigkeiten und Wärmedehnungen zu berücksichtigen wären.

All die zuvor genannten Kriterien, insbesondere im Hinblick auf den später fertigen Wärmetauscher, lassen sich nur äußerst schwierig im Hinblick auf ein massenproduktionsweises Vorbereiten oder Herstellen derartiger Bodenstrukturen von Wärmetauschern realisieren.

Aus der US-A- 3,686,917 ist eine Einrichtung zum Walzen von Blechen oder dergleichen bekannt, bei der zur Vor- und Fertigausformung von gewellten bzw. nutartigen Materialausformungen neben- bzw. parallel übereinandern angeordnete Walzenpaare vorgesehen sind; dabei weisen die Walzen u.a. mehrere mit Abstand vom betreffenden zylindrischen Walzengrundkörper mit im Sinne der "Wellenkonturausbildung" gerundeter Außenkontur auf.

Der Erfindung liegt die Aufgabe zugrunde, ein Verfahren gemäß Oberbegriff des Patentanspruchs 1 sowie eine Vorrichtung zu dessen Durchführung unter Berücksichtigung gemäß US-A-3,686,917 bekannter Vorrichtungsmerkmale anzugeben, womit die betreffenden ringscheibenförmigen Bauteile, und damit Wärmetauscherkonfigurationen der genannten bekannten Art massenproduktionsweise vergleichsweise einfach und kostensparend herstellbar sind, so, daß schon bei der Fertigung der ringscheibenförmigen Bauteile selbst alle wesentlichen Bauteilkriterien fertigungsoptimal einfließen können, die zur Erstellung eines Sammelrohrs oder Teils desselben sowie aber auch hinsichtlich der Bodenstruktur- und Matrixbetriebskriterien des Wärmetauschers zusammen erforderlich sind.

Die gestellte Aufgabe ist durch die Verfahrensschritte und -merkmale des Kennzeichnungsteils des Patentanspruchs 1 erfindungsgemäß gelöst.

Vorteilhafte Ausgestaltungen des Verfahrens ergeben sich aus den Patentansprüchen 2 bis 20; eine vorteilhafte Vorrichtungsausbildung nebst Ausgestaltung derselben geht aus den Ansprüchen 21 und 22 hervor.

Anhand der Zeichnungen ist die Erfindung beispielsweise erläutert.

Es zeigen:

Fig. 1 die perspektivische Ansicht eines zur Anwendung der Erfindung geeigneten Profilrohrwärmetauschers,

Fig. 2 ein Matrixquerschnittsfeld des Wärmetauschers nach Fig. 1, worin ferner der schichtweise Aufbau einer zum Anschluß von Matrixprofilrohrenden geeigneten Sammelrohrbodenstruktur verdeutlicht ist, die aus den erfindungsgemäß herzustellenden Ringen bzw. Ringlamellen zusammengesetzt ist,

Fig. 3 eine erste schematische Ausführungsform zur massenproduktionsweisen Vormaterialbereitstellung und -ablängung,

Fig. 4 bedarfsweise geeignete Vormaterialquerschnittsvarianten mit rechteckigem Querschnitt (a,b), kreisrundem Querschnitt (c), quadratischem Querschnitt (d) und vieleckigem Querschnitt (e),

Fig. 5 ein schematisiert gezeichnetes Walzbiegeverfahren, um einen gemäß Fig. 3 abgelängten Material streifen in Ringform zu biegen, z.B. im Wege einer Differenzdruckbiegung durch die Formwalzen,

Fig. 6 einen überwiegend rotatorisch durchzuführenden Biegewalzprozeß des ursprünglich geraden Materialstreifens aus Fig. 3 in einen ringförmigen Material streifen,

Fig. 7 die Vorderansicht des nach dem abgeschlossenen Biegewalzprozeß aus Fig. 6 durch Verschweißen entstandenen Ringes,

Fig. 8 die perspektivische Ansicht des durch ein oder mehrere geeignete weitere Formgebungsverfahren auf den benötigten Dickenverlauf verformten Ringes, hier mit über dem gesamten Umfang z.B. gleichförmigem Dickenverlauf,

Fig. 9 die Draufsicht des vor einsetzendem Streckwalzverformungspozeß elliptisch vorgeformten Ringes,

Fig. 10 eine schematisch dargestellte Draufsicht des im Wege des Streckwalzformgebungsprozesses gewollt deformierten Ringes unter weiterer Verdeutlichung dieser Deformationsausnutzung (Materialverdrängungen $V_D$ für den folgenden Auswalzprozeß W2);

Fig. 11 eine perspektivische Darstellung zur Verdeutlichung einer von Fig. 3 bis Fig. 6 abweichenden Vormaterialaufbereitung, wonach das zugeführte Vormaterial gleichförmig schraubenförmig gewickelt in die benötigte Ringform gebracht wird und im Wege anschließender achsparalleler Ablängung ringförmig vorgebogene Materialstreifen entstehen - s.h. auch Fig. 11a - und

Fig. 12 die Vorderansicht eines Profilwalzenpaars unter Verdeutlichung einer kammartigen Materialausformungseinbringung, und zwar gleichzeitig beidseitig in eine betreffende Ringsektion, wobei zugleich randständige Materialüberstreckungserscheinungen begegnende Maßnahmen verdeutlicht sind.

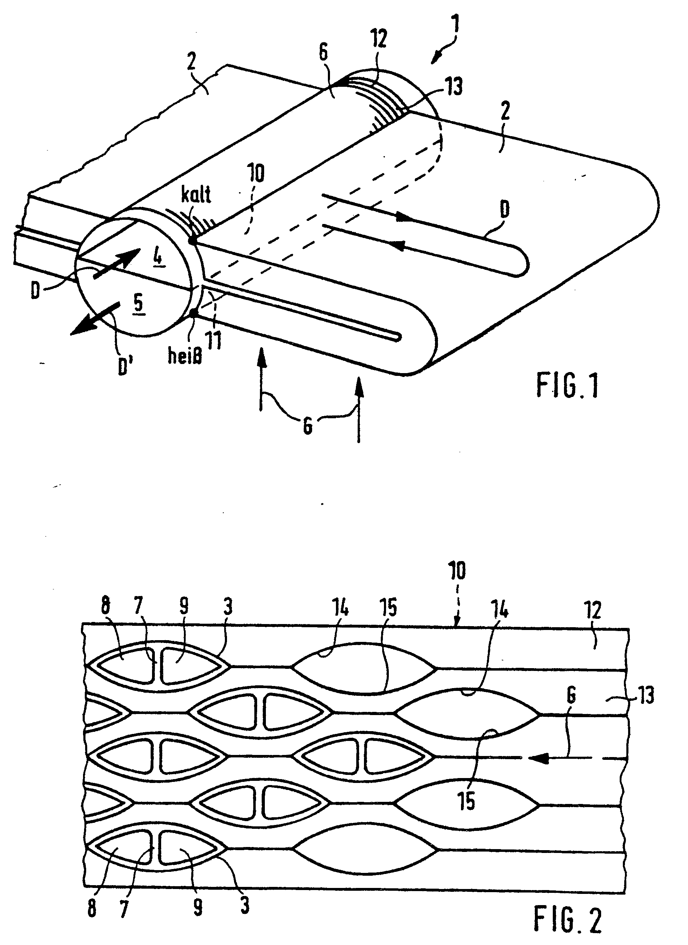

Fig. 1 veranschaulicht einen zur Anwendung des erfindungsgemäßen Herstellungverfahrens und der betreffenden Vorrichtungen hierzu geeigneten Wärmetauscher 1 zur Führung von Gasen stark unterschiedlicher Temperaturen, dessen im Heißgasstrom G liegende Kreuz-Gegenstrom- Matrix 2 aus separaten Profilrohren 3 (Fig.2) besteht, die einerseits an eine erste stationäre Rohrführung 4 für die Zufuhr kalter Druckluft D in die Matrix - (kalt) und andererseits an eine zweite stationäre Rohrführung 5 angeschlossen sind, aus der die über die Matrix 2 aufgeheizte Druckluft D' (heiß) einem Verbraucher zuführbar ist. Die beiden Rohrführungen können aber jeweils auch einem eigenen Sammelrohr zugeordnet sein. Jedes Matrixprofilrohr 3 kann, ausgehend von betreffenden rohrbodenseitigen Anschlüssen an die erste, 4, und zweite Rohrführung 5 des Sammelrohrs 6, zunächst parallel zu einer seitlich verlängerten Sammelrohrmeridianebene verlaufen, bevor es in einen gemeinsamen, die Druckluft D um 180° umlenkenden, U-förmigen Leitungsstrang übergeht. Die Matrix 2 wird ferner quer zur verlängerten Sammelrohrmeridianebene sowie unter Gewährleistung der zulässigen Heißgasversperrung zwischen den einander benachbarten Matrixprofilrohren 3, vom Heißgas G durchströmt.

Wie insbesondere aus Fig. 2 entnehmbar, weisen die mit strömungsgünstig zugespitzten Enden an- und abströmseitig in der Heißgasströmungsrichtung G liegenden Profilrohrleitungen 3 der Matrix einen linsenförmigen Querschnitt auf; dabei greifen die jeweils parallel zu einer gemeinsamen Matrixquerebene verlaufend angeordneten Profilrohrleitungen 3 mit ihren an- bzw. abströmseitig einander benachbarten Profilzuspitzungen unter Ausnutzung der infolge dieser Zuspitzungen sich räumlich ausbildenden Erweiterungen ineinander; jede Profilrohrleitung 3 der Matrix 2 (Fig. 2) enthält ferner zwei durch einen Profilsteg 7 voneinander getrennte Druckluftkanäle 8,9, die im Sinne der beiden zugespitzten Außenwandabschnitte der betreffenden Profilrohrleitung 3 dreickförmig ausgebildete Strömungsquerschnitte aufweisen.

Im Bereich der gemeinsamen Lageebene der betreffenden, matrixseitigen Bodenanschlußpartien 10,11 des Sammelrohrs 6 des Wärmetauschers 1 (Fig. 1) kann das genannte Sammelrohr 6 aus ringscheibenförmigen Elementen 12,13 (Fig.2) zusammengesetzt sein, die schichtweise aneinandergefügt werden und mit entsprechenden gegenseitigen Materialausformungen 14,15 ausgestattet sind, um im aneinandergefügten Zustande die betreffenden anschlußseitigen Enden der Matrixprofilrohre 3 möglichst exakt und formschlüssig zu umschließen. Nach dem Einfügen der anschlußseitigen Enden der Matrixprofilrohre 3 in die fertigen Materialausformungen 14,15 können darin die Enden eingelötet werden.

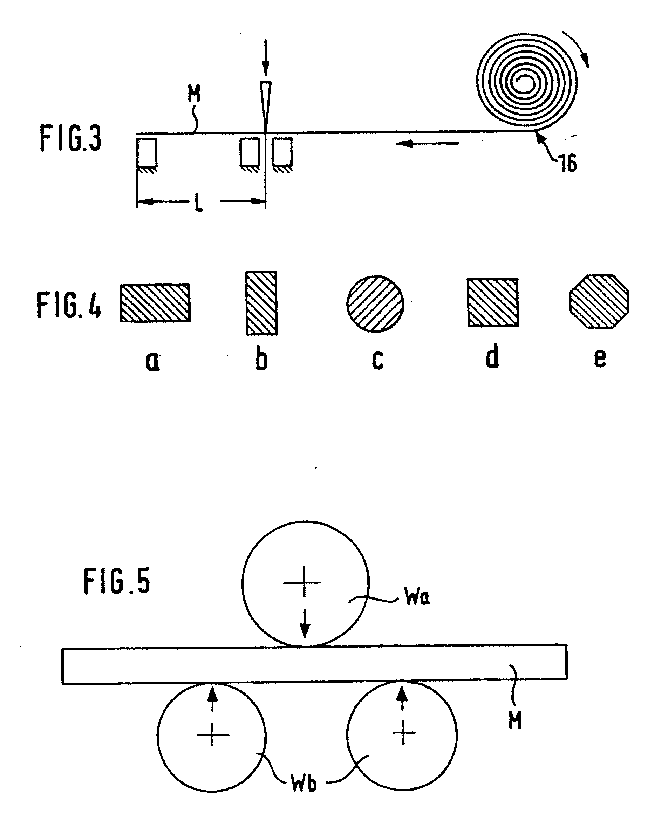

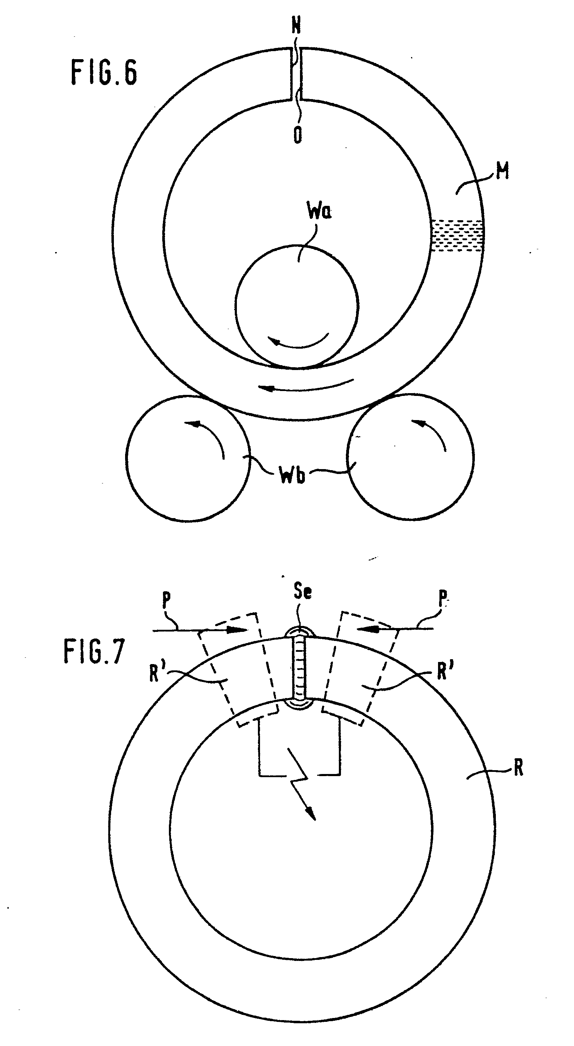

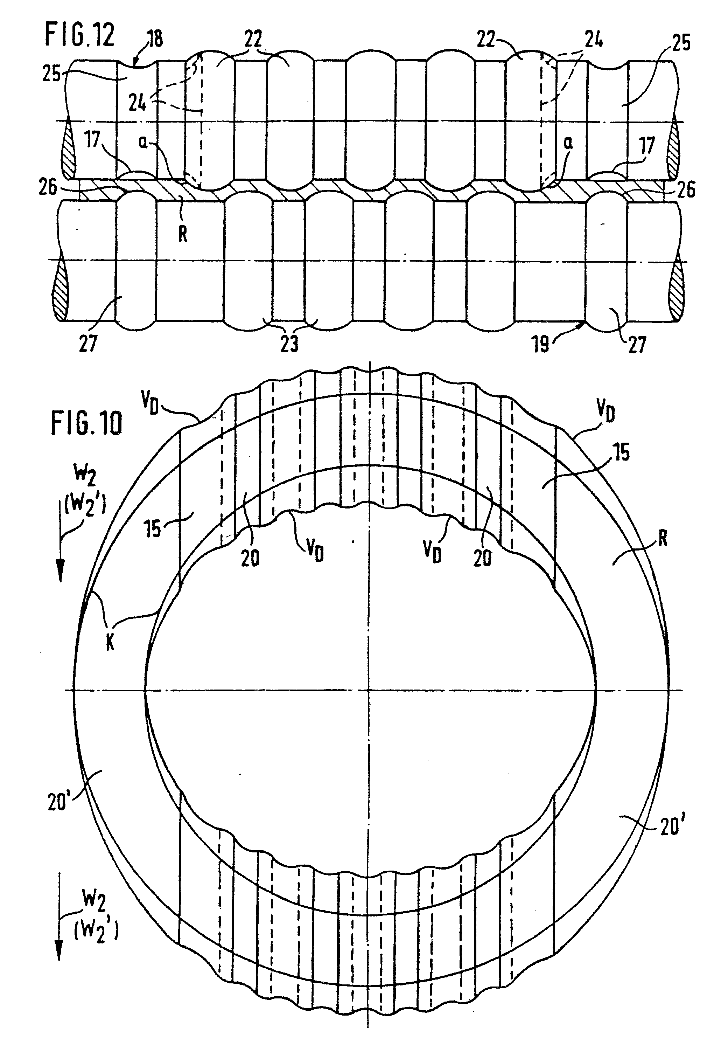

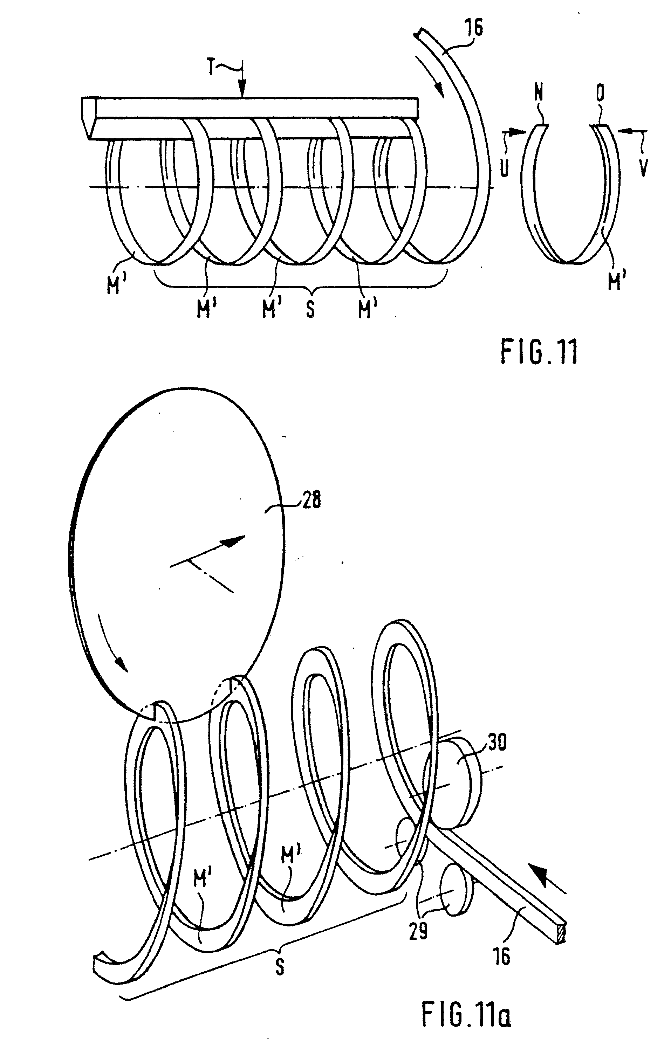

In etwas allgemeinerer Interpretation des Grundgedankens (Anspruch 1) zur massenproduktionsweisen Herstellung der ein zylindrisches Wärmetauschersammelrohre 6 bildenden ringscheibenarigen Bauteile 12,13 die z.B. auch als Lamellen zu bezeichnen wären und welche mit den örtlichen, zum Anschluß bzw. zur Aufnahme der Enden der Matrixprofilrohrleitungen3 geeigneten Materialausformungen 14,15 (Fig. 1) auszustatten wären, sollen von fortlaufend bandförmig zuführbarem, mit vorgegebenem wahlweise geeignetem Profilquerschnitt (Fig .4) ausgestattetem Vormaterial 16 (Fig.3) hinsichtlich der benötigten Länge L abgetrennte, durch Biegewalzen (Flg. 5 und Fig. 6) oder Wickeln in Ringform gebrachte Material streifen M an deren durch Abtrennung entstandenen Enden N, O miteinander verschweißt werden (Fig. 7), woraufhin der jeweils entstandene, in sich geschlossene Ring R (Fig. 7) in einem Streckwalzprozeß W 1 derart unterschiedlich verformt wird, daß örtliche Materialverdrängungen $V_D$ (Fig. 10) erzeugt werden, die für einen sich daran anschließenden in der Ringebene erfolgenden Auswalzprozeß W2 (Fig.10) benötigt werden, bei welchem gleichzeitig mehrere Materialausformungen, z.B. 15, für die Matrixprofilrohrleitungen 3 (Fig.2) in den Ring R eingearbeitet werden. Die Materialausformungen, z.B. 15, werden aus reliefartigen Oberflächenvertiefungen an den örtlichen Materialverdrängungen $V_D$ gewonnen. Nach dem Auswalzprozeß W2 für die Materialausformungen, z.B. 15, erfolgt gemäß dem Verfahrensgrundgedanken (Anspruch 1) ein kalibrierendes Präzisionswalzen W2' (Fig.10) der Materialausformungen und der angrenzenden ebenen Ringstirnflächen 20 als Fügeflächen der so vorbearbeiteten Ringe R. Danach könnten die Ringe R als ringscheibenförmige Bauteile 12,13 (Fig.2) zum Sammelrohr 6 zusammengefügt werden.

Beim fortlaufend zuführbaren Vormaterial 16 (fig .3) kann es sich um ein Band-, Draht- oder z.B. Stangenmaterial handeln, das ein den beschriebenen Umformvorgängen gemäßes Querschnittsprofil von geeigenter quadratischer (d), reckteckiger (a,b), kreisrunder (c) oder gegebenenfalls mehrgekkiger Gestalt (e) aufweist.

Die für das genannte Biegewalzen verwendeten Walzkörper sind in Fig. 5 und 6 jeweils mit Wa bzw. Wb bezeichnet.

Gemäß Fig. 3 bis 6 wird also zunächst davon ausgegangen, daß die Materialstreifen M zuerst abgetrennt und dann in Ringform gebracht werden. Gemäß Fig. 11 (Anspruch 2) besteht aber die Möglichkeit, daß ein Abschnitt S des laufend zuführbaren Vormaterials 16 zunächst im Sinne einer Schraubenfeder mit im wesentlichen gleichem Außen- und Innendurchmesser fortlaufend walzgewickelt wird, worauf mittels in Achsrichtung der Wicklung verlaufender, fortlaufender oder gemeinsamer Materialabtrennung T eine Einzelablängung in im wesentlichen ringartig vorgeformte Material streifen M' erfolgt.

Als Folge dieser schraubenfederartigen Wicklung auf einen Dorn oder dergleichen ergibt sich - in Axialrichtung der Wicklung gesehen - ein geringfügiger Versatz der betreffenden Enden N, O jedes ringartig vorgeformten Materialstreifen M', der durch geeignetes Stauchen bzw. Biegen in Richtung der Pfeile U, V (Fig.11) zwecks späteren Schweißens des Ringes R (Fig.7) kompensiert werden kann.

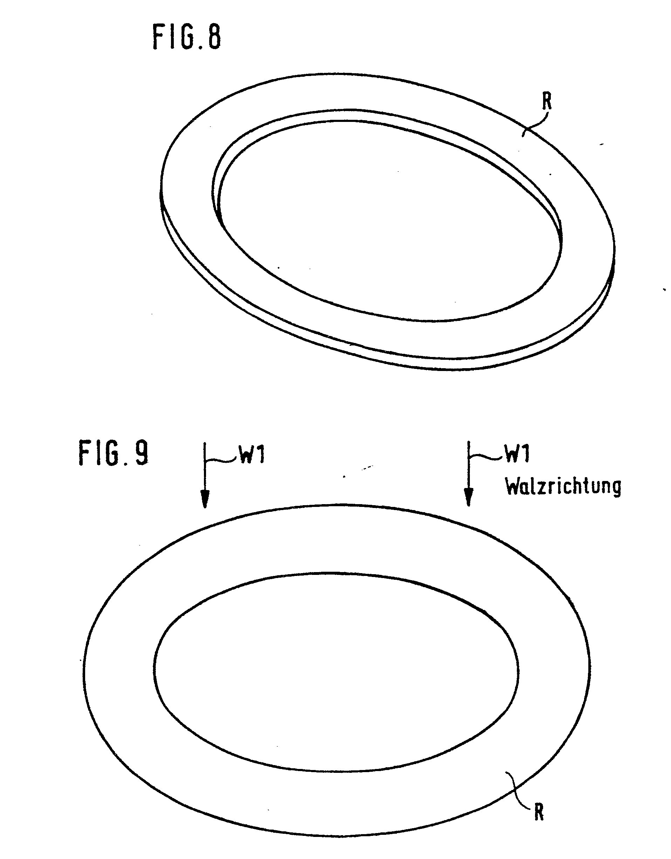

Im Rahmen des eingangs (Anspruch 1) erwähnten Streckwalzens - nach dem Verbindungsschnitt aus Fig. 7 - kann also der entstandene Ring R grundsätzlich etwa gemäß dem später gewünschten Dickenverlauf als im wesentlichen flache Scheibe gemäß Fig. 8 verformt werden. Unter Zuordnung eines entsprechenden rotatorischen Effektes entsprechender Formwalzen kann dieses Streckwalzen z.B. in Ringumfangsrichtung, aber auch in später nach näher erläuterter Weise in der Ringebene gemäß W1 (Fig. 9) erzeugt werden.

Das angegebene Streckwalzen W1 sowie der schon angegebene und nachstehend funktionell nach näher ausgeführte Auswalzprozeß W2 für die Ausarbeitung der Materialausformung haben gegenüber anderweitigen Verformungspraktiken (z.B. Prägen oder Schlagen im Gesenk) den Vorteil, daß die formenden Werkzeugflächen sich auf dem zu formenden Rohling abwälzen und dabei das Material örtlich unterschiedlich stark verdrängen können, ohne nennenswerte Reibungskontaktklemmung, die im allgemeinen eine Folge verhältnismäßig großflächiger Berührungen zwischen Werkzeug und Werkstück ist.

Verfahrensgemäß (Anspruch 3) können ferner die Materialausformungen, z.B. 15, gleichzeitig gemeinsam kammartig durch den in einer Ringebene in einer Richtung erfolgenden Auswalzprozeß W2 eingebracht werden (Fig.10). Damit sowie im Wege der später noch näher erläuterten Vorrichtungsanwendungen und -bauweisen ist es möglich, die reliefartigen Oberflächenvertiefungen im Sinne der benötigten Materialausformungen, z.B. 14 oder 15 (Fig.2), die später zur Aufnahme der Enden der Matrixprofilrohre 3 dienen, in exakter Zuordnung zu den ebenen Ringstirnflächen 20 bis 20' als Fügeflächen (Fig. 10) zu erzeugen.

Es können gemäß Anspruch 3 ferner die so hergestellten Materialausformungen, z.B 14, auf einer Seite (Fig.2) oder (14,15) auf zwei einander gegenüberliegenden Seiten sowie räumlich zueinander versetzt zwischen benachbarten Ringstirnflächen 20 (Fig. 10) die Anschlußöffnungen in den ringscheibenförmigen Bauteilen 12,13 ausbilden.

Verfahrensgemäß (Anspruch 4) können vor dem Auswalzprozeß W2 an dem betreffenden geschlossenen Ring R bereits randständige Materialerhabenheiten oder einseitig ausgeprägte Materialausbeulungen oder Formsicken 17 (Fig.12) angeformt worden sein, die zur Kompensation unzulässiger Materialverdrängungen oder -abstreckungen als Folge ungleichförmig verteilter Walzandrückkräfte vorgesehen sind. Dieses bezüglich hier einander gegenüberliegender bei der Profilwalzen 18,19 (Fig.12). Das Lösungsmerkmal (Anspruch 4) ist im Hinblick auf die jeweils randständigen Bereiche a (Fig. 12) von besonderer Bedeutung, da hier dem Material des Ringes R mangels Vorhandenseins einer auf der Gegenseite des Ringes R durchzuführenden Profilkonturierung, bzw. -gegenkraft, die Freiheit zur Querabstreckung gegeben ist - im Gegensatz zur mittleren Walzen-Ring-Partie, an der die später nach näher erläuterten Profilwalzen 18,19 (Fig. 12) mit ihren Profilierungskörpern 22,23 beidseitig am Ring R kammerartig ineinadergreifen, so daß in dieser nur mittleren Partie ein Gleichgewicht der Umformkräfte besteht. Im Wege der angegebenen beispielhaften Formsikken 17 (Fig.12) können also auch durch die genannten Querabstreckungen verursachte Formfehler im randständigen Bereich a für die späteren Materialausformungen, z.B. 15, sowie unzulässige Materialüberstreckungen eliminiert werden.

Als Vorrichtung (Anspruch 21) zur Durchführung des Verfahrens könnenmithin Profilwalzen 18 bzw. 19 (Fig. 12) für die Herstellung der betreffenden Materialausformungen 14 bzw. 15 vorgesehen sein, die mehrere mit Abstand von einem zylindrischen Grundkörper rotationssymmetrisch vorstehende Profilierungskörper 22 bzw. 23 mit gerundeter Außenkontur aufweisen, deren Axialabstand und gerundete Außenkontur auf die spätere Lage, Anordnung und Profilkontur der Materialausformungen 14,15 (Fig.2) für die daran anzuschließenden Enden der Matrix-- Profilrohre 3 abgestimmt ist. Weiter ist diese Vorrichtung dadurch gekennzeichnet, daß die im äußeren randständigen Bereich a angeordneten Profilierungskörper 22 einer Profilwalze 18, z.B. durch örtliche Materialeinziehungen 24 derart experimentell optimiert sind, daß beim Auswalzprozeß W2 auftretende Materialverdrängungen hinsichtlich Ring- und Materialausformungsformtreue ohne Einfluß bleiben.

Gemäß dieser Vorrichtung können dabei immer zwei parallel neben- bzw. übereinander angeordnete Profilwalzen 18,19 vorgesehen sein.

Vorrichtungsgemäß (Anspruch 22) können zumindest für einen letzten kalibrierenden Präzisionswalzvorgang W2' (Fig. 10) der Materialausformungen 14,15 und der Ringstirnflächen 20 als Fügeflächen Profilwalzen vorgesehen sein, deren formgebende Profilierungen aus hochpräzisen, z.B. numerisch gesteuerten Konturgebungsverfahren, gewonnen sind.

Auf diese Weise wird das Relief, welches sich aus den jeweiligen Ringstirnflächen 20 (Fügeflächen) des Ringes R und den betreffenden Materialausformungen 14 bzw. 15 zusammensetzt, in kohärenter Weise geformt, so daß die beim späteren Zusammenfügen der fertigen ringscheibenförmigenBauteile 12,13 (Fig.2) zwischen den Materialausformungen 14 bzw. 15 und den darin eingeschlossenen Fügespalte einen gewünscht engen und extrem gleichmäßigen Verlauf aufweisen, was sich wiederum äußerst günstig auf die Verlötung der Profilrohrenden mit den bzw. zwischen den Bauteilen 12,13 vorteilhaft auswirkt.

Zurückkommend auf den anfänglich schon teilweise detailliert behandelten Verfahrensprozeß besteht eine weitere vorteilhafte Verfahrensausgestaltung (Anspruch 5) darin, daß der durch Verschweißen entstandene in sich geschlossene Ring R (Fig.7) vor einem verformenden, insbesondere in einer Richtung in der Ringebene verlaufenden Streckwalzprozeß W2 (Fig.9), einer solchen Verformung unterzogen wird, daß vom Streckwalzprozeß W1 verursachte unerwünschte Deformationen der angestrebten kreisförmigen Ringgestalt zumindest teilweise kompensiert werden, wobei diese Verformung von elliptischer Gestalt ist (Fig.9) bzw. von exzentrisch ausgebeulter Gestalt ist. Diese elliptische (Fig.9) bzw. entsprechende Vordeformation des Ringes R kommt also den Abstreckungsdeformationen zuvor, damit eine angestrebte Kreiskonturierung trotz angewendeter Walzabstreckung erhalten bleibt.

Eine weitere vorteilhafte Weiterbildung des Verfahrens (Anspruchs 6) sieht vor, daß das die Materialausformungen, z.B. 15, schon enthaltende ringscheibenartige Bauteil R (Fig. 10) vorzugsweise vor dem letzten kalibrierenden Präzisionswalzvorgang W2' zumindest einem, eine abschließend gewünschte Außen- und Innenumfangskontur K erzwingenden Stanzprozeß unterworfen wird. Hierdurch können z.B. die beim Streckwalzvorgang W2' bewußt provozierten Materialverdrängungen VD (Fig. 10) im Sinne der angestrebten kreisrunden Gestalt (Konturen K) einfachst beseitigt werden. Durch Stanzprozeß können aber auch anderweitige unerwünschte Vordeformationen, als Ursache der vorangegangenen Verformungsprozesse, beseitigt werden.

Vorteilhaft können in weiterer Ausbildung des Verfahrens (Anspruch 7) durch den Stanzprozeß gegenseitige Füge- oder Zentrierführungsflächen und/oder örtliche Materialanhäufungen oder -verringerungen zur Beseitigung örtlich hoher Temperaturgradienten und Wärmedehnungsspannungen erzeugt werden. Damit ist es also möglich, den Querschnitt des später zu bildenden Sammelrohrs 6 (Fig.1) an örtlich unterschiedliche thermische und kräftemäßige Beanspruchungen anzupassen. Derart vorgegebene bzw. erzeugte Zentrier- und Fügeflächen können als erhebliche Montageerleichterungen für das oder die Sammelrohre bzw. für den gesamten Wäremtauscher schon beim Ringherstellprozeß in das Verfahren einfließen. Z.B. unterschiedlich ausgestanzte Ringhöhen bzw. Ringdurchmesser können für die erwünschten thermischen sowie Füge- und Montagekriterien verwendet werden. Auch können also mit den zu Anspruch 7 vermerkten Verfahrensmaßnahmen die insbesondere im Boden des später fertigen Sammelrohrs 6 (Fig. 1) insbesondere beim instationären Wärmetauscherbetrieb auftretenden Temperaturgradienten zumindest teilweise kompensiert werden (s.h. örtliche Materialanhäufungen oder -verminderungen).

Rückblickend auf Fig. 6 und 7 können verfahrensgemäß ferner (s.h. Anspruch 8) die jeweils beiden Enden N,O des in Ringform gebrachten Materialstreifens M (Fig. 6) zum bzw. beim Verschweißen unter Druck P gegeneinander gepreßt werden. Das gleiche gilt sinngemäß für den in der Art einer Schraubenfeder walzgewickelten Abschnitt S und die davon abgetrennten ringförmigen Material streifen M', nachdem sie zuvor gemäß U/V gestaucht worden sind (Fig.11).

Verfahrensgemäß (Anspruch 9) besteht ferner die Möglichkeit, daß die beiden Enden N,O des in Ringform gebrachten Materialstreifens M (Fig.6) vorzugsweise durch elektrisches Abbrennstumpfschweißen oder Elektronenstrahl- oder Laser- oder Hochfrequenzlichtbogen- oder Widerstandsschweißen miteinander verbunden werden. Dies gilt sinngemäß auch für die betreffenden Enden N,O der Fig. 11. Der Schweißvorgang ist in Fig. 7 symbolisch verdeutlicht ( ), das Bezugszeichen Se kennzeichnet die Schweißnaht.

In vorteilhafter Weiterbildung des Verfahrens (Anspruch 10) kann zumindest einem der genannten Walzvorgänge des Ringes bzw. des Ringbauteils jeweils mindestens ein durch Schmieden, Prägen, Heißpressen oder dergleichen geeignetes Formgebungsverfahren vorgeschaltet sein.

Verfahrensgemäß (Anspruch 11) kann der durch Verschweißen entstandene Ring R (Fig.7) vor dem Streckwalzen W1 (Fig.9) zur Gefügehomogenisierung, insbesondere der Schweißnaht Se sowie des schweißnahtnahen Materialgebiets R', einer Wärmebehandlung, z.B. durch Spannungsfreiglühen, unterworfen werden.

Äußerst vorteilhaft kann es sein, wenn - in Ausbildung des Verfahrens (Anspruch 12) - der durch Verschweißen entstandene Ring R (Fig. 7) gleichzeitig im Wege der zuvor genannten Wärmebehandlung oder unmittelbar danach einem Vorschmiedeprozeß unterworfen wird. So wird ein weiterer Beitrag zur Gefügehomogenisierung geleistet.

Vorteilhaft kann in weiterer Verfahrensausgestaltung (Anspruch 13) der Wärmebehandlungs- und/oder Vorschmiedeprozeß den später verlangten Verformungs- oder Festigkeitseigenschaften gemäß gleichförmig oder ungleichförmig intensiv über dem Ringumfang verteilt durchgeführt werden.

In vorteilhafter Ausgestaltung des Verfahrens (Anspruch 14) können ferner zumindest einem der genannten Walzformgebungsvorgänge mehrere schrittweise abwechselnd aufeinander folgende Zwischenglüh- oder Walzphasen zugeordnet werden. Auf diese Weise können u.a. die Verformungen und Gefügehomogenisierungen optimal im Hinblick auf die geforderten Materialeigenschaften des fertigen Ringes abgestimmt werden.

Im folgenden geht es um Maßnahmen, die betreffenden Ringstirnflächen 20,20' der Ringe R (Fig.10), die im fertigen Zustand (Fig.2) als ringscheibenförmige Bauteile 12,13 bezeichnet sind, in einer Weise vorzubereiten, daß sie sich oberflächenseitig gefügehomogen und fluiddicht verknüpfen bzw. zusammensintern lassen.

Zwecks späteren Fügens können also in Ausgestaltung des Verfahrens -(Anspruch 15)- die ringscheibenförmigen Bauteile R (Fig. 10) an den betreffenden Ringstirnflächen 20,20' als Fügeflächen durch mechanische Bearbeitungsvorgänge in einen metallurgisch aktivierten Zustand gebracht werden, und zwar zwischen aufeinander folgenden formgebenden Schritten oder gleichzeitig mit diesen.

Als weitere Maßnahme zur Unterstützung des Fügens ist eine Ausgestaltung des Verfahrens (Anspruch 16) gekennzeichnet durch eine zusätzliche oder ausschließlich chemische bzw. elektrochemische Aktivierung oder eine Aktivierung im elektrischen Feld für die besagten Ringstirnflächen als Fügeflächen zum metallurgischen Verbinden der Ringbauteile 12,13 (Fig.2).

Ferner kann gemäß dem Verfahren (Anspruch 17) gleichzeitig mit dem Streckwalz- oder mit dem endlichen Kalibrierwalzprozeß W1' bzw. W2' einhergehend, auf die zu fügenden gegenseitigen Kontaktflächen der ringscheibenartigen Bauteile Zusatzmaterial zum späteren Fügen derselben aufgebracht werden.

In Verfahrensausgestaltung (Anspruch 18) kann das Zusatzmaterial durch Aufplattieren einer Folie, eines Drahtes oder dergleichen aufgebracht werden.

Ferner kann das Zusatzmaterial durch Aufplattieren und Kalibrieren von in einem elektrischen Feld abgeschiedenen Schichten aufgebracht werden (Anspruch 19).

Verfahrensgemäß (Anspruch 20) kann das Zusatzmaterial aus beim Aufwalzen (z.B. Streckwalzprozeß W1 -Fig. 9- oder Kalibrierwalzprozeß W2' -Fig.10-) verdichtetem Pulvermaterial bestehen, wobei das Pulver elektrostatisch, durch Spritzen, Tauchsintern, Aufpressen oder Aufreiben auf die betreffenden Oberflächen bzw. Fügeflächen aufgebracht wird.

Rückblickend auf Fig. 12 wäre noch zu vermerken, daß im Falle des Vorhandenseins von Formsicken 17 am Ring R diese zugleich als Führungsflächen der Profilwalzen, z.B. 18, mit koaxialen Ausnehmungen 25 ausgestattet ist, die der Sickenkontur formfolgend angepaßt sind. Sind dagegen zur Verhinderung der randständigen Materialabstreckungen Materialausbeulungen vorgesehen, die zugleich einen Materialeinzug 26 auch auf der von der Sicke 17 abgewandten Seite des Ringes R einschließen, so kann dieser Materialeinzug 26 beim Walzen von einer entsprechend rotationssymmetrischen Profilierung 27 an der anderen Formwalze 19, die letztere führend, überfahren werden.

Fig. 11a ist eine Abwandlung des Auführungsbeispiels nach Fig. 11 dahingehend, daß eine fortlaufende, in Achsrichtung durchführbare Abtrennung der einzelnen ringförmigen Material streifen M' im Wege einer Trennscheibe 28 vorgesehen ist, welche beim Abtrennvorgang rotiert und gleichzeitig in Achsrichtung bewegt wird. Das Vormaterial 16 durchläuft Führungs- bzw. Biegewalzen 29,30, von denen mehrere weitere örtlich entsprechend verteilt angeordnet sein können, um gemäß Abschnitt S die "Schraubenfeder" zu erzeugen.

## Ansprüche

1. Verfahren zur massenproduktionsweisen Herstellung von Wärmetauschersammelrohren (6), die zur Druckluftführung in eine und/oder aus einer von Heißgas (G) umströmten Profilrohrmatrix (2) ausgebildet sind, wobei die Sammelrohre (6) aus ringscheibenförmigen, schichtweise aneinandergefügten Bauteilen (12, 13), z. B. Lamellen, bestehen, die vor ihrer Zusammenfügung mit zur gegenseitigen Umschließung der Matrixprofilrohrenden (3) geeigneten, durch Walzen erzeugten Materialausformungen (14, 15) ausgestattet werden, gekennzeichnet durch folgende Verfahrensschritte:
   - Abtrennen von Materialstreifen (M) in gewünschter Länge (L) von fortlaufend bandförmig zugeführtem, einen vorgegebenen Profilquerschnitt enthaltenden Vormaterial (16);
   - Biegewalzen der Material streifen (M) zur Herstellung offener Ringe (M);
   - Herstellung geschlossener Ringe (R) durch Verschweißung der offenen Ringenden (N, O);
   - Streckwalzen (W1) der geschlossenen Ringe (R) mit der Erzeugung örtlicher Materialverdrängungen (VD);
   - in der Ringebene verlaufender Auswalzprozeß (W2) unter gleichzeitiger Einarbeitung der Materialausformungen (14, 15), die aus reliefartigen Oberflächenvertiefungen an den örtlichen Materialverdrängungen ($V_D$) gewonnen werden;
   - kalibrierendes Präzisionswalzen (W2') der Materialausformungen (14, 15) und der angrenzenden Ringstirnflächen (20) als Fügeflächen der so vorbearbeiteten Ringe (R) als ringscheibenförmige Bauteile (12, 13) vor deren gegenseitiger Zusammenfügung.

2. Verfahren nach Anspruch 1, dadurch gekennzeichnet, daß zunächst ein Abschnitt (S) des Vormaterials (16) in der Art einer Schraubenfeder fortlaufend walzgewickelt wird, worauf mittels in Achsrichtung der Wicklung verlaufender Materialabtrennung (T) eine Einzelablängung in ringartig vorgeformte Materialstreifen (M') erfolgt.

3. Verfahren nach Anspruch 1 oder 2, wobei die Materialausformungen (14) auf einer Seite oder (14,15) auf zwei gegenüberliegenden Seiten zwischen benachbarten Ringstirnflächen der ringscheibenförmigen Bauteile (12, 13) räumlich zueinander versetzte Anschlußöffnungen für Matrixprofilrohrenden ausbilden, dadurch gekennzeichnet, daß die Materialausformungen (15) gleichzeitig gemeinsam kammartig durch den in einer Ringebene in einer Richtung erfolgenden Auswalzprozeß (W2) eingearbeitet werden.

4. Verfahren nach einem oder mehreren der Ansprüche 1 bis 3, dadurch gekennzeichnet, daß vor dem Auswalzprozeß (W2) an dem betreffenden geschlossenen Ring (R) bereits randständige Materialerhabenheiten oder einseitig ausgeprägte Materialausbeulungen oder Formsicken (17) angeformt worden sind, die zur Kompensation unzulässiger Materialverdrängungen oder -abstreckungen als Folge ungleichförmig verteilter Walzandrückkräfte vorgesehen sind.

5. Verfahren nach Anspruch 1, dadurch gekennzeichnet, daß der durch Verschweißen entstandene in sich geschlossene Ring (R) vor einem verformenden, insbesondere in einer Richtung in der Ringebene verlaufenden Streckwalzprozeß (W$_1$), einer solchen Verformung unterzogen wird, daß vom Streckwalzprozeß verursachte unerwünschte Deformationen der angestrebten kreisförmigen Ringgestalt zumindest teilweise kompensiert werden, wobei diese Verformung von elliptischer (Fig. 9) bzw. exzentrisch ausgebeulter Gestalt ist.

6. Verfahren nach einem oder mehreren der Ansprüche 1 bis 5, dadurch gekennzeichnet, daß das die Materialausformungen (15) enthaltende ringscheibenartige Bauteil (R) vorzugsweise vor dem letzten kalibrierenden Präzisionswalzvorgang (W2') zumindest einem, eine abschließend gewünschte Außen- und Innenumfangskontur (K) erzwingenden Stanzprozeß unterworfen wird.

7. Verfahren nach Anspruch 6, dadurch gekennzeichnet, daß durch den Stanzprozeß gegenseitige Füge- und Zentrierführungsflächen und/oder örtliche Materialanhäufungen oder -verringerungen zur Beseitigung örtlich hoher Temperaturgradienten und Wärmedehnungsspannungen erzeugt werden.

8. Verfahren nach Anspruch 1, dadurch gekennzeichnet, daß die jeweils beiden Enden (N, O) des in Ringform gebrachten Materialstreifens (M) zum bzw. beim Verschweißen unter Druck gegeneinander gepreßt werden (Fig. 7).

9. Verfahren nach Anspruch 8, dadurch gekennzeichnet, daß die beiden Enden (N, O) des in Ringform gebrachten Materialstreifens (M) durch elektrisches Abbrennstumpfschweißen oder Elektronenstrahl- oder Laser- oder Hochfrequenzlichtbogen- oder Widerstandsschweißen miteinander verbunden werden (Fig. 7).

10. Verfahren nach einem oder mehreren der Ansprüche 1 bis 9, dadurch gekennzeichnet, daß zumindest einem der genannten Walzvorgänge des Ringes bzw. des Ringbauteils jeweils mindestens ein durch Schmieden, Prägen, Heißpressen oder dergleichen geeignetes Formgebungsverfahren vorgeschaltet ist.

11. Verfahren nach einem oder mehreren der Ansprüche 1 bis 10, dadurch gekennzeichnet, daß der durch Verschweißen entstandene Ring (R) vor dem Streckwalzen (W1) zur Gefügehomogenisierung, insbesondere der Schweißnaht (Se) sowie des schweißnahtnahen Materialgebiets (R') einer Wärmebehandlung, z. B. durch Spannungsfreiglühen, unterworfen wird.

12. Verfahren nach Anspruch 11, dadurch gekennzeichnet, daß der durch Verschweißen entstandene Ring (R) gleichzeitig im Wege der Wärmebehandlung oder unmittelbar danach einem Vorschmiedeprozeß unterworfen wird.

13. Verfahren nach Anspruch 12 oder 13, dadurch gekennzeichnet, daß der Wärmebehandlungs- und/oder Vorschmiedeprozeß den später verlangten Verformungs- oder Festigkeitseigenschaften gemäß gleichförmig oder ungleichförmig intensiv über dem Ringumfang verteilt durchgeführt werden.

14. Verfahren nach einem oder mehreren der Ansprüche 1 bis 13, dadurch gekennzeichnet, daß zumindest einem der genannten Walzformgebungsvorgänge mehrere schrittweise abwechselnd aufeinanderfolgende Zwischenglüh- oder Walzphasen zugeordnet werden.

15. Verfahren nach Anspruch 1, dadurch gekennzeichnet, daß die ringscheibenförmigen Bauteile an den betreffenden Stirnfügeflächen durch mechanische Bearbeitungsvorgänge in einen metallurgisch aktivierten Zustand gebracht werden, und zwar zwischen aufeinanderfolgenden formgebenden Schritten oder gleichzeitig mit diesen.

16. Verfahren nach Anspruch 1 oder 15, gekennzeichnet durch eine zusätzliche oder ausschließlich chemische bzw. elektrochemische Aktivierung oder eine Aktivierung im elektrischen Feld für die besagten Ringstirnflächen als Fügeflächen zum metallurgischen Verbinden der Ringbauteile.

17. Verfahren nach Anspruch 1, 6 sowie 15 oder 16, dadurch gekennzeichnet, daß gleichzeitig mit dem Streckwalz- oder mit dem endlichen Kalibrierwalzprozeß (W1 bzw. W2') einhergehend, auf die zu fügenden gegenseitigen Kontaktflächen der ringscheibenartigen Bauteile ein Zusatzmaterial aufgebracht wird.

18. Verfahren nach Anspruch 15 oder 17, dadurch gekennzeichnet, daß das Zusatzmaterial durch Aufplattieren einer Folie, eines Drahtes oder dergleichen aufgebracht wird.

19. Verfahren nach Anspruch 16, dadurch gekennzeichnet, daß das Zusatzmaterial durch Aufplattieren und Kalibrieren von in einem elektrischen Feld abgeschiedenen Schichten aufgebracht wird.

20. Verfahren nach Anspruch 15 oder 17, dadurch gekennzeichnet, daß das Zusatzmaterial aus beim Aufwalzen verdichtetem Pulvermaterial besteht, wobei das Pulver elektrostatisch, durch Spritzen, Tauchsintern, Aufpressen oder Aufreiben auf die betreffenden Ober- bzw. Fügeflächen aufgebracht wird.

21. Vorrichtung zur Durchführung des Verfahrens nach Anspruch 1 oder 3, mit insbesondere zwei parallel neben- bzw. übereinander angeordneten für die Herstellung der Materialausformungen (15 bzw. 14) vorgesehenen Profilwalzen (18 bzw. 19), die mehrere mit Abstand von einem zylindrischen Grundkörper rotationssymmetrisch vorstehende Profilierungskörper (22 bzw. 23) mit gerundeter Außenkontur aufweisen, dadurch gekennzeichnet, daß der Axialabstand und die gerundete Außenkontur der Profilierungskörper (22 bzw. 23) auf die spätere Lage, Anordnung und Profilkontur der an die Materialausformungen (14 bzw. 15) anzuschließenden Enden der Matrix-Profilrohre (3) abgestimmt ist und daß die im äußeren randständigen Bereich (a) angeordneten Profilierungskörper (22) einer Profilwalze (18), z. B. durch örtliche Materialeinziehungen (24), derart experimentell optimiert sind, daß beim Auswalzprozeß (W2) auftretende Materialverdrängungen hinsichtlich der Ring- und Materialausformungsformtreue ohne Einfluß bleiben.

22. Vorrichtung nach Anspruch 21 dadurch gekennzeichnet, daß zumindest für einen letzten kalibrierenden Präzisionswalzvorgang (W2') der Materialausformungen (14,15) und Ringstirnflächen (20) als Fügeflächen (20) Profilwalzen vorgesehen sind, deren formgebende Profilierungen aus hochpräzisen, z. B. numerisch gesteuerten Konturgebungsverfahren, gewonnen sind.

## Claims

1. A method of mass producing heat exchanger header tubes (6) which are constructed for the conveyance of compressed air into and/or out of a profiled tube matrix (2) around which heated gas (G) flows, the header tubes (6) consisting of annular disc-shaped layer-wise connected components (12, 13), e.g. plates, which prior to being joined for mutual enclosure of the matrix profiled tube ends (3) have shaped-out portions (14, 15) of the material which are produced by a rolling process, characterised by the following procedural steps:
   - separation of material strips (M) at a desired length (L) from a continuously supplied strip of preliminary material (16) having a given profile cross-section;
   - bending rolling of the material strips (M) to produce open rings (M);
   - production of closed rings (R) by welding the ends (N, O) of the open rings;
   - stretch rolling (W1) of the closed rings (R) and
   - creation of localised compactions (V_D) of material;
   - a rolling out process (W2) extending in the plane of the rings with a simultaneous working in of the shaped-out portions (14, 15) of material which are gained from relief-like superficial depressions on the localised compacted portions (V_D) of material;
   - calibrating precision rolling (W2') of the shaped-out portions (14, 15) of material and adjacent annular end faces (20) to provide jointing surfaces for the thus prepared rings (R) as annular disc-shaped components (12, 13) prior to their being joined to one another.

2. A method according to claim 1, characterized in that firstly a portion (S) of the preliminary material (16) is continuously roll-lapped in the manner of a coiled spring, whereupon, by means of a material separation (T) extending in the axial direction of the winding, the material is cut to single lengths of annularly pre-formed material strips (M').

3. A method according to claim 1 or 2, in which the shaped-out portions (14) of material on one side or (14, 15) on two oppositely disposed sides are formed between adjacent annular end faces of the annular disc-shaped components (12, 13) of spatially offset connecting apertures for ends of matrix profiled tubes, characterized in that the shaped-out portions (15) of material are at the same time jointly worked in comb-wise by the rolling out process (W2) which is carried out in one direction in one ring plane.

4. A method according to one or more of claims 1 to 3, characterized in that prior to the rolling out process (W2) on the relevant closed ring (R), already marginally present raised portions of material or bulges or furrows (17) which are pressed out on one side are integrally formed, being provided by way of compensation for unacceptable areas of compacted or stretched material as the result of unevenly distributed applications of rolling pressure.

5. A method according to claim 1, characterised in that the ring (R) which is closed in itself and which is created by welding is, prior to any shaping or stretching-rolling process (W1) which extends in one direction particularly in the plane of the ring, is subjected to such a shaping process that undesired deformations from the intended circular annular form which may be caused by the stretching-rolling process are at least partially compensated for, this shaping being of an elliptical (Fig. O) or eccentrically bulging form.

6. A method according to one or more of claims 1 to 5, characterised in that the annular disc-like component (R) containing the shaped-out portions (15) of material are, preferably prior to the final calibrating precision rolling process (W2') subjected to at least one stamping process which produces the external and internal peripheral contour (K) which is finally desired.

7. A method according to claim 6, characterised in that matching jointing and centring guide surfaces and/or localised accumulations or reductions of material created by the stamping process are created to eliminate locally high temperature gradients and heat expansion stresses.

8. A method according to claim 1, characterised in that the respective both ends (N, O) of the strip of material (M) which is converted to a ring-shape are pressed against each other under pressure to produce or at the time of welding (Fig. 7).

9. A method according to claim 8, characterised in that the two ends (N, O) of the strip of material (M) which is brought to a ring-shape are connected to each other by electric flash butt welding or electron beam or laser or high frequency arc or resistance welding (Fig. 7).

10. A method according to one or more of claims 1 to 9, characterised in that at least one of the said rolling processes of the ring or of the annular component is in each case preceded by at least forging, impressing, hot pressing or like suitable shaping method.

11. A method according to one or more of claims 1 to 10, characterised in that the ring (R) produced by welding is prior to stretch rolling (W1) subjected to a heat treatment, e.g. by stress annealing to homogenise the structure, particularly of the weld seam (Se) and of the area of the material (I') which is close to the weld seam.

12. A method according to claim 11, characterised in that the ring (R) created by welding is at the same time as the heat treatment or immediately thereafter subjected to a pre-forging process.

13. A method according to claim 12 or 13, characterised in that the heat treatment and/or pre-forging process is carried out while being distributed uniformly or non-uniformly intensively over the periphery of the ring according to the shaping or strength properties which may subsequently may be required.

14. A method according to one or more of claims 1 to 13, characterised in that a plurality of step-wisely alternating successive intermediate annealing or rolling phases are associated with at least one of the said rolling shaping processes.

15. A method according to claim 1, characterised in that the annular disc-shaped components on the relevant end jointing surfaces are brought to a metallurgically activated state by mechanical machining processes, in fact between successive shaping steps or simultaneously with such steps.

16. A method according to claim 1 or 15, characterised by an additional or exclusively chemical or electrochemical activation or an activation in an electrical field for the said annular end faces as jointing faces for metallurgically connecting the annular components.

17. A method according to claim 1, 6 or 15 or 16, characterised in that simultaneously with the stretching/rolling or the final calibrating rolling process (W1 or W2') an additional material is applied to the matching contact surfaces of the annular disc-shaped components which are to be joined.

18. A method according to claim 15 or 17, characterised in that the additional material is applied by plating-on a foil, a wire or the like.

19. A method according to claim 16, characterised in that the additional material is applied by plating-on and by calibration of layers deposited in an electrical field.

20. A method according to claim 15 or 17, characterised in that the additional material consists of powdered material which is compressed while it is being rolled on, the powder being applied to the relevant surfaces or jointing areas electrostatically by spraying, dip-sintering, pressing or rubbing.

21. An apparatus for carrying out the method according to claim 1 or 3, with in particular two parallel adjacently disposed or superposed profiled rollers (18 or 19) provided for producing the shaped-out portions (15 or 14) of material and which comprise a plurality of rotationally symmetrically protruding profiling members (22 or 23) of rounded outer contours which are spaced apart from a basic cylindrical body, characterised in that the axial gap and the rounded outer contours of the profiling members (22 or 23) are attuned to what will subsequently be the position, disposition and profile contour of those ends of the matrix profile tubes (3) which are adjacent the shaped-out portions (14 or 15) of material and in that the profiling members (22) disposed in the outer marginal area (a) of a profiled roller (18) are so optimised by experiment, e.g. by localised contractions (24) of material that compactions of material which occur during the rolling out process (W2) have no influence on the precision of the rings or the accuracy of the shaped-out portions of material.

22. An apparatus according to claim 21, characterised in that at least for a final calibrating process (W2') of precision rolling of the shaped-out portions (14, 15) of the material and the annular end faces (20) as jointing surfaces (20), profiled rollers are provided of which the shaping profilings are obtained by high-precision, e.g. numerically controlled, contouring processes.

**Revendications**

1. Procédé de fabrication en grande série de tuyaux collecteurs d'échangeurs de chaleurs (6), qui sont constitués pour la conduite d'air comprimé dans une et/ou à partir d'une matrice de tuyaux profilés (2) balayée par du gaz chaud (G), les tuyaux collecteurs (6) sont composés de pièces constitutives (12, 13) en forme de disques annulaires aboutés par couches, tels que des lamelles, qui, avant leur assemblage, sont pourvus de déformations d'un matériau (14, 15) produites par laminage, et sont aptes à une fermeture réciproque des extrémités des tuyaux profilés de matrice (3), caractérisé par les phases opératoires suivantes:
   - séparation de bandes de matière (M) à la longueur (L) désirée d'une matière initiale (16) contenant une section de profil déterminée amenée sous forme de bandes continues,
   - calandrage par cintrage de la bande de matière (M) pour la fabrication d'anneaux ouverts (M),
   - fabrication d'anneaux fermés (R) par soudage des extrémités d'anneaux (N, O) ouverts,
   - calandrage par étirage (W1) des anneaux fermés (R) avec la production de déplacement local de matière (VD),
   - processus de laminage (W2) se déroulant dans le plan de l'anneau, avec exécution simultanée des déformations de matière qui sont obtenues à partir de cavités de la surface se présentant en relief aux endroits de déplacements locaux (VD) de matière,
   - laminage de précision calibré (W2') des façonnages de matière (14, 15) et des faces frontales annulaires (20) avoisinantes, en tant que surfaces de jonction des anneaux (R) ainsi préusinées constituant des pièces constitutives (12, 13) en forme de disques annulaires avant leur assemblage réciproque.

2. Procédé selon la revendication 1, caractérisé en ce que tout d'abord une partie (S) de la matière initiale (16) est enroulée en continu à la manière d'un ressort hélicoïdal, tandis que s'effectue, au moyen d'une séparation de matière (T), se déroulant suivant la direction de l'axe de l'enroulement, une mise à longueur séparée dans la bande de matière (M') préformée en anneaux.

3. Procédé selon la revendication 1 ou 2, où les déformations de matière (14) d'un côté ou (14, 15) sur deux côtés opposés entre des faces frontales annulaires voisines des pièces constitutives en forme de disques annulaires (12, 13) constituent des ouvertures de raccordement décalées entre elles spatialement pour les extrémités de tuyaux profilés de matrice, caractérisé en ce que les enlèvements de matière (15) sont simultanément et conjointement exécutés en forme de crêtes au moyen du processus de laminage (W2) s'effectuant dans une direction dans un plan de l'anneau.

4. Procédé selon l'une ou plusieurs des revendications 1 à 3, caractérisé en ce qu'il a déjà été formé, avant le processus de laminage (W2), sur l'anneau (R) fermé considéré, des reliefs de matière continus sur les bords ou des bosselages de matière estampés d'un côté, ou en forme de gouttes (17), qui sont prévus pour compenser des déplacements ou des étirages de matière inadmissibles résultant d'une répartition irrégulière des forces de pression de laminage.

5. Procédé selon la revendication 1, caractérisé en ce que l'anneau (R) fermé sur lui-même obtenu par soudage est soumis, avant un processus de calandrage par étirage (W1) le déformant, qui se déroule en particulier dans une direction dans le plan de l'anneau, à une déformation telle que des déformations indésirées de la forme d'anneau circulaire recherchée provoquées par le processus de calandrage par étirage sont compensées, du moins en partie, cette déformation ayant une forme elliptique (figure 9) ou déportée excentriquement.

6. Procédé selon l'une ou plusieurs des revendications 1 à 5, caractérisé en ce que l'élément (R) annulaire comportant les déformations de matière est soumis, de préférence avant la dernière opération calibrée de laminage de précision, au moins à un processus d'estampage imposant le profil périphérique extérieur et intérieur désiré en finition.

7. Procédé selon la revendication 6, caractérisé en ce qu'il est produit par le processus d'estampage des surfaces réciproques d'assemblage et de guidage de centrage et/ou des accumulations ou des réductions locales de matière, afin de remédier localement à des gradients thermiques et à des tensions de dilatation thermique élevées.

8. Procédé selon la revendication 1, caractérisé en ce que les deux extrémités respectives (N, O) de la bande de matière (M) mise en forme en anneau sont comprimées l'une contre l'autre pour le soudage sous pression (figure 7).

9. Procédé selon la revendication 8, caractérisé en ce que les deux extrémités (N, O) de la bande de matière (M) mise en forme d'anneau sont reliées ensemble par soudage électrique bout à bout par soudage par bombardement d'électrons ou au laser ou à l'arc électrique à haute fréquence ou par résistance (figure 7).

10. Procédé selon l'une ou plusieurs des revendications 1 à 9, caractérisé en ce qu'au moins un des processus de laminage mentionnés de l'anneau ou de l'élément annulaire est précédé d'un procédé de mise en forme approprié par forgeage, estampage, compression à chaud ou similaire.

11. Procédé selon l'une ou plusieurs des revendications 1 à 10, caractérisé en ce que l'anneau (R) obtenu par soudage est soumis avant le calandrage par étirage (W1), afin d'homogénéiser sa texture, notamment celle du cordon de soudure (Se) et de la matière (R') proche du cordon de soudure, à un traitement thermique, tel qu'un recuit de détente.

12. Procédé selon la revendication 11, caractérisé en ce que l'anneau (R) obtenu par soudage est soumis en même temps qu'au traitement thermique ou immédiatement après à un processus de forgeage préalable.

13. Procédé selon la revendication 12 ou 13, caractérisé en ce que les processus de traitement thermique et/ou de préformages sont exécutés intensivement avec une répartition uniforme ou irrégulière sur la périphérie de l'anneau, en fonction des caractéristiques de déformation ou de résistance exigées ultérieurement.

14. Procédé selon l'une quelconque des revendications 1 à 13, caractérisé en ce qu'il est adjoint à au moins une opération de mise en forme par laminage, mentionnée, plusieurs phases intermédiaires de recuit ou de laminage alternant tour à tour.

15. Procédé selon la revendication 1, caractérisé en ce que les pièces constitutives en forme de disques annulaires sont amenées à un état activé métallurgiquement sur les surfaces d'assemblage frontal considérées au moyen de processus d'usinage mécaniques, soit entre les étapes de formage successives, ou en même temps que celles-ci.

16. Procédé selon la revendication 1 ou 15, caractérisé par une activation supplémentaire ou uniquement chimique ou électrochimique ou par une activation dans un champ électrique des faces frontales annulaires mentionnées, en tant que surfaces de jonction pour l'assemblage métallurgique des éléments annulaires.

17. Procédé selon les revendications 1, 6, et 15 ou 16, caractérisé en ce qu'il est appliqué, en même temps que le processus de calandrage par étirage ou de laminage de calibrage final (W1 ou W2'), une matière supplémentaire sur les surfaces de contact à assembler mutuellement des pièces constitutives en forme de disques annulaires.

18. Procédé selon la revendication 15 ou 17, caractérisé en ce que la matière supplémentaire est appliquée par placage d'une feuille, d'un fil métallique ou similaire.

19. Procédé selon la revendication 16, caractérisé en ce que la matière supplémentaire est appliquée par placage et calibrage de couches séparées dans un champ électrique.

20. Procédé selon la revendication 15 ou 17, caractérisé en ce que la matière supplémentaire est constituée par une matière pulvérulente comprimée lors du laminage, la poudre étant appliquée électrostatiquement, par pulvérisation, par frittage immergé, par pression ou par friction sur les surfaces de jonction considérées.

21. Dispositif pour l'exécution du procédé selon la revendication 1 ou 3, comportant notamment deux cylindres à profil (18 et 19) disposés parallèlement côte à côte ou en superposition qui présentent plusieurs corps de profilage (22 ou 23) faisant saillie, symétriquement par rapport à l'axe de rotation, à quelque distance d'un corps de base cylindrique, avec un profil extérieur arrondi, caractérisé en ce que la distance axiale et le profil extérieur arrondi des corps de profilage (22 ou 23) sont accordés à la position ultérieure, à la disposition et au contour des profils des extrémités des tubes profilés de matrice (3) se raccordant aux déformations de matière et en ce que les corps de profilage (22) disposés sur la zone extérieure de bord (18) d'un cylindre à profil (18) sont optimisés expérimentalement par des insertions locales de matière, de telle sorte que les déplacements de matière se produisant lors du processus de laminage (W2) restent sans influence sur la fidélité de forme des anneaux et des déformations de matière

22. Dispositif selon la revendication 21, caractérisé en ce qu'il est prévu au moins pour la dernière opération de laminage de précision calibrée (W2') des déformations de matière (14, 15) et des faces frontales annulaires (20) des cylindres à profil comme surfaces de jonction (20), dont les profilages de mise en forme sont obtenus au moyen de procédés très précis, tels que des procédés de formage de contours à commande numérique.

FIG.1

FIG.2

FIG.3

FIG.4

a  b  c  d  e

FIG.5

FIG.6

FIG.7

## FIG.8

## FIG.9

W1    W1
Walzrichtung

R

FIG.12

FIG.10

FIG.11

FIG.11a